# EUROPEAN PATENT APPLICATION

(11) **EP 1 295 715 A1**
(43) Date of publication of application: **26.03.2003**
(21) Application number: 02018263.0
(22) Date of filing: 22.08.2002
(51) Int. Cl.: B41C 1/10, B41N 1/08, B41N 1/20, B41N 3/00

(54) **Presensitized plate for preparing lithographic printing plate**

(30) Priority: 23.08.2001 JP 2001252511
(71) Applicant: FUJI PHOTO FILM CO., LTD., Kanagawa-ken (JP)
(72) Inventor: Higashi, Tatsuji, Yoshida-cho, Haibara-gun, Shizuoka-ken (JP)
(74) Representative: HOFFMANN - EITLE

(57) **Abstract**

The present invention relates to a photopolymerizable presensitized plate used for preparing a lithographic printing plate comprising an aluminum substrate provided thereon with at least a photopolymerizable light-sensitive layer, the lithographic printing plate is characterized in that the edges of the opposed two sides or four sides are curved from the light-sensitive layer towards the back face, wherein a drop observed in the curved portion at the section has a height ranging from 30 to 200µm and wherein the area of notched portion on the curved portion ranges from 200 to 100,000µm². The lithographic printing plate prepared from the presensitized plate permits the solution of the problem such that the surface area of paper corresponding to the edges of the printing plate is stained and excellent setter-conveying characteristics are achieved.

## Description

### Background of the Invention

The present invention relates to a photopolymerizable presensitized plate used for preparing a lithographic printing plate (hereinafter referred to as "photopolymerizable PS plate"). More specifically, the present invention pertains to a photopolymerizable PS plate, which does not cause any contamination of edges.

As a method for preparing a PS plate whose substrate is an aluminum plate, there has presently been widely used one comprising the steps of subjecting an aluminum plate in general in the form of, for instance, a sheet-like or coil-like shape to a variety of surface treatments such as graining and anodization, which are used alone or in any combination, applying a light-sensitive liquid onto the surface of the aluminum plate, drying the same and then cutting the resulting light-sensitive layer-carrying aluminum plate into pieces (or small sheets) having a desired size. Regarding the printing operations carried out using a printing plate prepared by, for instance, imagewise exposing such a light-sensitive lithographic printing plate and then developing the imagewise exposed plate, if the images are printed on paper whose size is smaller than that of the printing plate as will be encountered when printing is carried out in the usual sheet-fed press, any problem concerning the edges of the printing plate never arises since the portion corresponding to the edges of the printing plate never serves as a printing surface, while if the images are continuously printed on rolled paper using a rotary press, the portion corresponding to the edges of the printing plate comes in contact with the rolled paper and thus serves as a printing surface and therefore, the ink adhered to the edges of the printing plate is transferred to printing paper as contaminants. This results in the substantial deterioration of the commercial value of the printed matters.

As examples of means for preventing any contamination or staining of the edges of a printing plate, Japanese Examined Patent Publication (hereunder referred to as "J.P. KOKOKU") No. Sho 57-46754 discloses a method in which the edges of an aluminum plate are cut at an angle, to the aluminum surface, ranging from 10 to 45 degree, but if the number of printed matters exceeds 10,000, the ink is accumulated on the edges to thus cause contamination of printed matters. In addition, J.P. KOKOKU No. Sho 62-61946 discloses a method in which the edges of an aluminum substrate are desensitized in advance, Japanese Un-Examined Patent Publication (hereunder referred to as "J.P. KOKAI") No. Sho 63-256495 discloses a method comprising the step of preliminarily subjecting the edges of a printing plate having an aluminum substrate to hydrophilization in advance and J.P. KOKAI Hei 11-52558 discloses a method comprising the step of cutting the edges of a printing plate having an aluminum substrate provided thereon with a diazo-type light-sensitive layer in such a manner that the edges thereof are upwardly convex. However, the foregoing problem has not yet satisfactorily been solved in case of the photopolymerizable PS plate and therefore, there has been desired for the further improvement of the latter.

Moreover, if burr is present on the edges of an aluminum substrate, the resulting lithographic printing plate is caught by conveying rollers and/or an exposure table and therefore, the printing plate cannot smoothly be set on a predetermined position. In addition, the rollers are gradually damaged due to the action of such burr and the conveying characteristics of the rollers would be deteriorated.

### Summary of the Invention

Accordingly, it is an object of the present invention to provide a photopolymerizable presensitized plate used for preparing a lithographic printing plate (a photopolymerizable PS plate), which permits the solution of such a problem that printing paper is stained in the area corresponding to the edges of the printing plate and which is excellent in setter-conveying characteristics.

The foregoing object of the present invention can be achieved by a photopolymerizable presensitized plate used for preparing a lithographic printing plate, which comprises an aluminum substrate provided thereon with at least a photopolymerizable light-sensitive layer, the presensitized plate being characterized in that the edges of the opposed two sides or four sides of the printing plate are curved from the light-sensitive layer towards the back face, wherein a drop observed in the curved portion at the section has a height ranging from 30 to 200 µm and wherein the area of notched portion on the curved portion ranges from 200 to 100,000 µm².

More specifically, the present invention has been completed on the basis of the following findings.

There has sometimes been observed staining of edge portions even when a highly sensitive laser-exposed photopolymerizable PS plate is cut into pieces under such cutting conditions that any staining is not caused at the edge portions of a diazo compound-containing PS plate. For this reason, the edges of the printing plate after development were confirmed by taking a scanning electron micrograph and as a result, it was found that there was simply observed cracking of the anodized film on an aluminum substrate in case of the diazo compound-containing PS plate and there was not observed any remaining light-sensitive layer, while there was observed the presence of remaining light-sensitive layer in case of the photopolymerizable PS plate. Further, when any organic substance present on the portion carrying such a remaining film was removed by applying oxygen plasma thereto in a vacuum, it was found that there were cracks of the anodized layer on the aluminum substrate behind the remaining film. The reason for this has not yet been clearly elucidated, but it would be assumed that a part of the light-sensitive layer remains on an aluminum substrate due to the phenomenon called metal fog originated from cracks of an anodized film and accordingly, the edges are stained. In other words, it would be assumed that when a photopolymerizable PS plate is cut into pieces, cracks are formed in the anodized film (mainly comprising Al₂O₃) on the edges of the substrate thereof, free electrons originated from the metal constituting the substrate are transferred to the light-sensitive layer through the cracks, these electrons further move towards a photopolymerization initiator present in the light-sensitive layer to thus generate radicals and this becomes a cause of such a phenomenon that the monomers present in the light-sensitive layer are polymerized. Thus, it would be recognized that edge portions are stained due to this phenomenon even when the photopolymerizable PS plate is cut into pieces under such cutting conditions that any diazo compound-containing PS plate never causes staining. Based on the observation, the inventors of the present invention investigated and found that a photopolymerizable PS plate, which comprises an aluminum substrate provided thereon with at least a photopolymerizable light-sensitive layer, the PS plate being characterized in that the edges of the opposed two sides or four sides of the printing plate are curved from the light-sensitive layer towards the back face, wherein a drop observed in the curved portion at the section has a height ranging from 30 to 200 µm and wherein the area of notched portion on the curved portion ranges from 200 to 100,000 µm², provides the solution of the problem such that the surface area of paper corresponding to the edges of the printing plate is stained and the achievement of excellent setter-conveying characteristics.

### Brief Description of the Drawings

Fig. 1 is a view of the cutting portion of a slitter device.
Fig. 2 is a cross-sectional view of an upper and lower cutting blade of a slitter device.
Fig. 3 is an expanded view of the portion A shown in Fig. 2.
Fig. 4 shows a shape of the edge portion of a PS plate according to an embodiment of the present invention.

### Description of the Preferred Embodiments

The present invention will hereunder be described in more detail. The photopolymerizable presensitized plate used for preparing a lithographic printing plate of the present invention comprises an aluminum substrate provided thereon with at least a photopolymerizable light-sensitive layer. The PS plate of the present invention is characterized in that the edges of the opposed two sides or four sides of the printing plate are curved from the light-sensitive layer towards the back face, wherein a drop observed in the curved portion at the section has a height ranging from 30 to 200 µm and wherein the area of notched portion on the curved portion ranges from 200 to 100,000 µm². In other words, the PS plate has a curved portion at the edges of the opposed two sides or four sides, which the curved portion is formed in such a manner that it is outwardly bent along the edges, wherein a drop or a shear drop observed in the curved portion at the section has a height ranging from 30 to 200 µm and wherein the area of notched portion on the curved portion ranges from 200 to 100,000 µm².

The photopolymerizable PS plate according to the present invention can be prepared by applying at least a photopolymerizable light-sensitive layer as will be detailed below onto an aluminum substrate having a hydrophilized surface as will be described below and then cutting the resulting assembly according to the following method. In addition, when cutting the PS plate, it may be cut together with a lamination or a slip-sheet for protecting the plate surface. The drop or curved surface may be formed by shear stress through the cutting of the plate.

The sheet-like or coil-like aluminum substrate provided thereon with a photopolymerizable light-sensitive layer is cut into pieces such that the edges of the plate have curved surfaces formed in such a manner that the plate is outwardly bent along the edges, that a drop or shear drop formed through cutting and observed in the curved portion at the section has a height ranging from 30 to 200 µm, preferably 40 to 180 µm and that the area of notched portion on the curved portion ranges from 200 to 100,000 µm², preferably 500 to 70,000 µm².

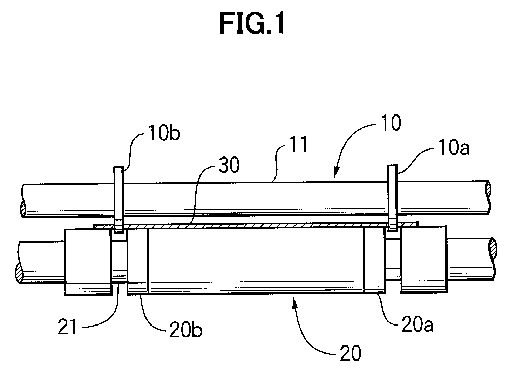

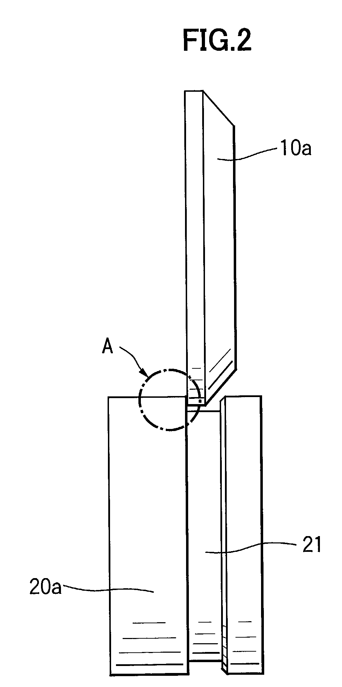

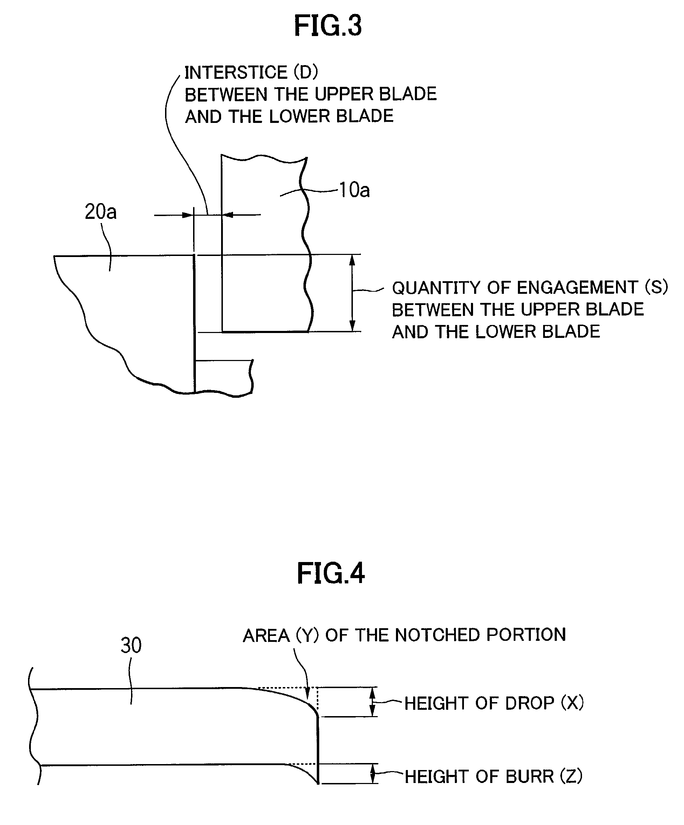

Fig. 1 is a diagram of the cutting portion of a slitter device. Fig. 2 is a diagram showing shapes of the upper cutting blade 10a and the lower cutting blade 20a according to the present invention. In addition, Fig. 3 is an expanded view of the portion A shown in Fig. 2 and shows the shape of the tip of the upper cutting blade 10a and that of the tip of the lower cutting blade 20a as well as the interstice between the upper and lower cutting blades. Fig. 4 shows the sectional shape of the edges cut using the slitter device shown in Fig. 1 and the cutting blades shown in Fig. 2.

In the slitter device, upper and lower paired cutting blades 10, 20 are arranged on right and left sides thereof. These cutting blades 10, 20 consist of disk-like circular blades, the upper cutting blades 10a and 10b are co-axially supported by a rotation axis 11, while the lower cutting blades 20a and 20b are likewise co-axially supported by a rotation axis 21. In this connection, the upper cutting blades 10a and 10b are rotated in a direction opposite to the rotational direction of the lower cutting blades 20a and 20b. A PS plate 30 is passed through the interstices formed between the upper cutting blades 10a and 10b and the lower cutting blades 20a and 20b and thus, the plate 30 is cut into pieces having a desired width. More specifically, the intended sectional shape of the edges can be obtained by adjusting the interstice between the upper cutting blade 10a and the lower cutting blade 20a, the interstice between the upper cutting blade 10b and the lower cutting blade 20b (these interstices being defined to be D) and the quantity of engagement (S) between the upper blade and the lower blade. Preferably, the cutting is carried out while the interstice (D) between the upper cutting blade 10a and the lower cutting blade 20a, the interstice (D) between the upper cutting blade 10b and the lower cutting blade 20b are set at a level ranging from 10 to 300 µm and the quantity of engagement (S) between the upper blade to the lower blade is set at a level ranging from 50 to 1000 µm. In this respect, if the quantity of engagement (S) is smaller than 50 µm, the cutting of the printing plate is quite difficult, while if it exceeds 1000 µm, strain is generated on the sections.

The plate at the notched portion shown in Fig. 4 is curved from the upper side towards the back side, that is, the plate has a convex curve. Preferably, the portion has a convex curved shape free of any bent. When the notched portion has a bent, ink sometimes adheres to the bent and this leads to staining of printed matters. The height (X) of the drop shown in Fig. 4 preferably ranges from 30 to 200 µm and more preferably 40 to 180 µm. The area (Y) of the notched portion shown in Fig. 4 preferably ranges from 200 to 100,000 µm² and more preferably 500 to 70,000 µm². If the height (X) of the drop shown in Fig. 4 is less than 30 µm, the edge portions cause staining. On the other hand, if the height (X) of the drop exceeds 200 µm, the height of the burr (Z, projection towards the lower face) shown in Fig. 4 increases and a problem accordingly arises such that a failure in the automatic conveyance is generated in a laser-exposing setter. In addition, if the area (Y) of the notched portion shown in Fig. 4 is less than 200 µm², the edge portions cause staining. On the other hand, if the area of the notched portion (Y) shown in Fig. 4 exceeds 100,000 µm², the height of the drop shown in Fig. 4 increases and accordingly, a failure in the automatic conveyance is liable to be easily generated in a laser-exposing setter.

The height (X) of the drop, the area (Y) of the notched portion and the height (Z) of the burr can be determined using a super depth-shape determination microscope VK-8500 (available from Kieyense Company).

Then the photopolymerizable PS plate according to the present invention will hereunder be described in detail.

The photopolymerizable light-sensitive composition constituting the light-sensitive layer of a photopolymerizable PS plate used in the present invention comprises, as essential components, an addition-polymerizable ethylenically unsaturated group-containing compound, a photopolymerization initiator and a polymer binder and also comprises, as optional components, a various kinds of compounds such as a coloring agent, a plasticizer and a heat polymerization inhibitor, simultaneous with the foregoing essential components.

The term "ethylenically unsaturated group-containing compound" used herein means a compound having an ethylenically unsaturated bond, in the molecule, which can undergo addition polymerization by the action of a photopolymerization initiator when a photopolymerizable light-sensitive composition containing the same is irradiated with actinic light rays, to thus initiate crosslinking and curing.

Such an addition polymerizable, ethylenic double bond-containing compound may be selected from the group consisting of compounds each having at least one, preferably at least two terminal ethylenically unsaturated bonds.

Such a compound may, for instance, be those each having a chemical form such as a monomer, a prepolymer or a dimer, a trimer or an oligomer or a mixture thereof or a copolymer thereof.

Examples of monomers of compounds each containing an addition polymerizable, ethylenic double bond and copolymers thereof include esters of unsaturated carboxylic acids (such as acrylic acid, methacrylic acid, itaconic acid, crotonic acid, isocrotonic acid and maleic acid) with aliphatic polyhydric alcohol compounds and amides of unsaturated carboxylic acids with aliphatic polyvalent amine compounds.

Specific examples of monomers or esters of aliphatic polyhydric alcohol compounds with unsaturated carboxylic acids are acrylic acid esters such as ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxy-propyl) ether, trimethylolethane triacrylate, hexanediol diacrylate, 1,4-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol pentaacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate and polyester acrylate oligomer.

Specific examples of such esters also include methacrylic acid esters such as tetramethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, dipentaerythritol pentamethacrylate, sorbitol trimethacrylate, sorbitol tetramethacrylate, bis-[p-(3-methacryloxy-2-hydroxypropoxy) phenyl] dimethylmethane and bis-[p-(methacryloxy-ethoxy) phenyl] dimethylmethane.

Specific examples of such esters also include itaconic acid esters such as ethylene glycol diitaconate, propylene glycol diitaconate, 1,3-butanediol diitaconate, 1,4- butanediol diitaconate, tetramethylene glycol diitaconate, pentaerythritol diitaconate and sorbitol tetraitaconate.

Specific examples of such esters further include crotonic acid esters such as ethylene glycol dicrotonate, tetramethylene glycol dicrotonate, pentaerythritol dicrotonate and sorbitol tetradicrotonate and maleic acid esters such as ethylene glycol dimaleate, triethylene glycol dimaleate, pentaerythritol dimaleate and sorbitol tetramaleate.

Moreover, examples of such esters are any mixture of the foregoing ester monomers.

In addition, specific examples of the foregoing amide monomers of aliphatic polyvalent amine compounds with unsaturated carboxylic acids include methylene bisacrylamide, methylene bismethacrylamide, 1,6-hexamethylene bisacrylamide, 1,6-hexamethylene bismethacrylamide, diethylenetriamine trisacrylamide, xylylene bisacrylamide and xylylene bismethacrylamide.

Examples of other monomers or copolymers are vinyl urethane compounds each having at least two polymerizable vinyl groups in the molecule, obtained by adding vinyl monomers having hydroxyl groups represented by the following general formula (A) to polyisocyanate compounds containing at least two isocyanate groups in the molecule, such as those disclosed in J.P. KOKOKU No. Sho 48-41708:

CH₂=C(R⁵)-COOCH₂CH(R⁶)OH (A)

Wherein R⁵ and R⁶ each represents a group H or CH₃.

Examples of the foregoing monomers or copolymers also usable herein include urethane acrylates such as those disclosed in J.P. KOKAI No. Sho 51-37193 and J.P. KOKOKU No. Hei 2-32293; polyester acrylates such as those disclosed in J.P. KOKAI No. Sho 48-64183 and J.P. KOKOKU Nos. Sho 49-43191 and Sho 52-30490; and functional acrylates and methacrylates such as epoxy (meth)acrylates obtained by reacting epoxy resins with (meth)acrylic acid. Also usable herein include those introduced, as photo-setting monomers and oligomers, in Bulletin of Adhesive Society in Japan, 1984, Vol. 20, No. 7, pp. 300-308.

In this respect, the amount of these ethylenically unsaturated group-containing compounds to be incorporated into the light-sensitive composition ranges from 5 to 80% by weight and preferably 30 to 70% by weight on the basis of the total weight of the components constituting the light-sensitive layer.

Moreover, the photopolymerization initiator incorporated into the light-sensitive layer of the photopolymerizable PS plate used in the present invention may be, for instance, a variety of known photopolymerization initiators disclosed in, for instance, various patents and literatures or a combination of at least two photopolymerization initiators (photo-initiator system), which may appropriately be selected depending on the wavelength of a light source selected. Specific examples thereof will be listed below, but the present invention is not restricted to these specific ones at all.

There have been proposed a variety of photo-initiator systems even when using a light source such as a visible light source whose wavelength is not less than 400 nm, an Ar laser, a semiconductor laser capable of emitting a secondary higher harmonic wave and an SHG-YAG laser and specific examples thereof are certain kinds of photo- reductive dyes disclosed in U.S. Patent No. 2,850,445 such as Rose Bengale, eosine and erythrosine; systems comprising combinations of dyes and initiators such as combined initiator systems comprising dyes and amines (see, J.P. KOKOKU No. Sho 44-20189), combined systems comprising hexaaryl biimidazole, radical generators and dyes (see, J.P. KOKOKU No. Sho 45-37377), systems comprising hexaaryl biimidazole and p-dialkylamino-benzylidene ketone (see, J.P. KOKOKU No. Sho 47-2528 and J.P. KOKAI No. Sho 54-155292), systems comprising cyclic cis-α-dicarbonyl compounds and dyes (J.P. KOKAI No. Sho 48-84183), systems containing cyclic triazine and merocyanine dyes (J.P. KOKAI No. Sho 54-151024), systems comprising 3-ketocumarin and activators (J.P. KOKAI Nos. Sho 52-112681 and Sho 58-15503), systems comprising biimidazole, styrene derivatives and thiols (J.P. KOKAI No. Sho 59-140203), systems containing organic peracids and dyes (J.P. KOKAI Nos. Sho 59-1504, Sho 59-140203, Sho 59-189340 and Sho 62-174203, J.P. KOKOKU No. Sho 62-1641 and U.S. Patent No. 4,766,055), systems comprising dyes and active halogen-containing compounds (J.P. KOKAI Nos. Sho 63-258903 and Hei 2-63054), systems comprising dyes and borate compounds (see, for instance, J.P. KOKAI Nos. Sho 62-143044, Sho 62-150242, Sho 64-13140, Sho 64-13141, Sho 64-13142, Sho 64-13143, Sho 64-13144, Sho 64-17048, Hei 1-229003, Hei 1-298348 and Hei 1-138204), systems comprising rhodanine ring-containing dyes and radical generators (J.P. KOKAI Nos. Hei 2-179643 and Hei 2-244050), systems containing titanocene and 3-ketocumarin dyes (J.P. KOKAI No. Sho 63-221110), systems comprising combinations of titanocene, xanthene dyes and amino-or urethane group-containing addition polymerizable ethylenically unsaturated group- containing compounds (J.P. KOKAI Nos. Hei 4-221958 and Hei 4-219756), systems containing titanocene and specific merocyanine dyes (J.P. KOKAI No. Hei 6-295061) and systems comprising titanocene and benzopyran ring-containing dyes.

Moreover, there have recently been developed lasers emitting light beams having wavelengths ranging from 400 to 410 nm (Violet Laser) and photo-initiator systems highly sensitive to light rays having wavelengths of not less than 450 nm, which is sensitive to these light rays emitted through the foregoing lasers and these photo-initiator systems can thus be used in the present invention.

Examples of such photo-initiator systems are cationic dyes-borate systems (J.P. KOKAI No. Hei 11-84647), merocyanine dye-titanocene systems (J.P. KOKAI No. 2000-147763) and carbazole type dye-titanocene systems (Japanese Patent Application Serial No. Hei 11-221480).

In the present invention, particularly preferred photo-initiator systems are systems containing titanocene compounds because of their excellent sensitivity.

The titanocene compound usable herein may appropriately be selected from a variety of titanocene compounds such as those disclosed in J.P. KOKAI Nos. Sho 59-152396 and Sho 61-151197. Specific examples of titanocene compounds include di-cyclopentadienyl-Ti-dichloride, di-cyclopentadienyl-Ti-bis-phenyl, di-cyclopenta- dienyl-Ti-bis-2,3,4,5,6-pentafluorophenyl-1-yl, di-cyclopentadienyl-Ti-bis-2,3,5,6-tetra- fluorophenyl-1-yl, dicyclopentadienyl-Ti-bis-2,4,6-trifluorophenyl-1-yl, di-cyclopentadienyl-Ti-bis-2,6-di-fluorophenyl-1-yl, di-cyclopentadienyl-Ti-bis-2,4-di-fluorophenyl-1- 1- yl, dimethyl-cyclopentadienyl-Ti-bis-2,3,4,5,6-tetrafluorophenyl-1-yl, dimethyl-cyclo- pentadienyl-Ti-bis-2,6-difluorophenyl-1-yl and di-cyclopentadienyl-Ti-bis-2,6-difluoro-3-(pyryl-1-yl) phenyl-1-yl.

It has been known that the photo-initiation ability of the foregoing photo-initiator can further be improved by the addition of a hydrogen-donor compound, for instance, a thiol compound such as 2-mercaptobenzothiazole, 2-mercaptobenzimidazole or 2-mercaptobenzoxazole, or an amine compound such as N-phenylglycine or N,N- dialkylamino aromatic alkyl ester to the photo-initiator.

The amount of these photopolymerization initiator (system) to be incorporated into the light-sensitive composition ranges from 0.05 to 100 parts by weight, preferably 0.1 to 70 parts by weight and more preferably 0.2 to 50 parts by weight per 100 parts by weight of the ethylenically unsaturated group-containing compound.

The polymer binder used in the light-sensitive layer of the photopolymerizable PS plate according to the present invention should not only serve as a film-forming agent in the composition, but also be soluble in an alkaline developer. For this reason, polymer binders usable herein are, for instance, organic high molecular weight polymers soluble in alkali water or capable of being swollen with the same.

For instance, the use of a water-soluble organic high molecular weight polymer as such an organic high molecular weight polymer permits the preparation of a light-sensitive layer capable of being developed with water. Examples of such organic high molecular weight polymers are addition polymers carrying carboxyl groups on their side chains such as those disclosed in, for instance, J.P. KOKAI Nos. Sho 59-44615, Sho 54-92723, Sho 59-53836 and Sho 59-71048 and J.P. KOKOKU Nos. Sho 54-34327, Sho 58-12577 and Sho 54-25957 and specific examples thereof are methacrylic acid copolymers, acrylic acid copolymers, itaconic acid copolymers, crotonic acid copolymers, maleic acid copolymers and partially esterified maleic acid copolymers.

Examples of such organic polymers also include acidic cellulose derivatives carrying carboxylic acid residues on their side chains. In addition to the foregoing substances, useful examples thereof also include those obtained by adding cyclic acid anhydrides to addition polymers having hydroxyl groups. Among these, suitably used herein are [benzyl (meth)acrylate-(meth)acrylic acid-optional other addition polymerizable vinyl monomer] copolymers and [allyl (meth)acrylate-(meth)acrylic acid- optional other addition polymerizable vinyl monomer] copolymers. Examples of other water-soluble organic polymers useful in the present invention include polyvinyl pyrrolidone and polyethylene oxides. In addition, it is also effective to use, for instance, alcohol-soluble polyamides and polyethers of 2,2-bis-(4-hydroxyphenyl)-propane with epichlorohydrin for the improvement of the strength of the cured film.

Organic polymers likewise useful for the purpose of the present invention include, for instance, polyurethane resins such as those disclosed in J.P. KOKOKU Nos. Hei 7-120040, Hei 7-120041, Hei 7-120042 and Hei 8-12424 and J.P. KOKAI Nos. Sho 63-287944, Sho 63-287947, Hei 1-271741 and Hei 11-352691.

These high molecular weight polymers may be improved in their cured film strength by introducing groups capable of undergoing a radical reaction into side chains. Examples of such groups include addition polymerizable functional groups such as ethylenically unsaturated bonding groups, amino groups and epoxy groups, functional groups capable of being converted into radicals through irradiation with light rays such as mercapto groups, thiol groups, halogen atoms, triazine structures and onium salt structures, or polar groups such as carboxyl groups and imido groups. Specific examples of the foregoing addition polymerizable functional groups particularly preferably used herein are ethylenically unsaturated bonding groups such as acryl, methacryl, allyl and styryl groups, but useful examples thereof further include functional groups selected from the group consisting of amino groups, hydroxyl groups, phosphonate residues, phosphate residues, carbamoyl groups, isocyanate groups, ureido groups, ureylene groups, sulfonate residues and ammonio groups.

The polymer binder used in the present invention preferably has an appropriate molecular weight and an acid value in order to maintain a desired developing ability of the composition and effectively used herein include high molecular weight polymers whose weight average molecular weight ranges from 5000 to 300,000 and an acid value ranging from 20 to 200.

These organic high molecular weight polymers may be incorporated into the light-sensitive composition in any amount. However, if the amount thereof exceeds 90% by weight, problems arise, for instance, the resulting images are insufficient in the strength. Therefore, the polymers are preferably used in an amount ranging from 10 to 90% by weight and more preferably 30 to 80% by weight. In addition, the relative amounts of the photopolymerizable ethylenically unsaturated group-containing compound and the organic high molecular weight polymer preferably fall within the range of from 1/9 to 9/1, more preferably 2/8 to 8/2 and more preferably 3/7 to 7/3 as expressed in terms of mass ratios.

Moreover, in the present invention, it is desirable to add, to the light-sensitive composition, a small amount of a heat polymerization inhibitor in order to inhibit any unnecessary heat polymerization of the polymerizable ethylenically unsaturated group-containing compound during the preparation or storage of the composition, in addition to the foregoing basic components. Examples of appropriate heat polymerization inhibitors are hydroquinone, p-methoxyphenol, di-t-butyl-p-cresol, pyrogallol, t-butylcatechol, benzoquinone, 4,4'-thiobis(3-methyl-6-t-butylphenol), 2,2'-methylene-bis(4-methyl-6-t-butylphenol), cerous salt of N-nitrosophenyl-hydroxylamine and aluminum salt of N-nitrosophenyl-hydroxylamine. The amount of the heat polymerization inhibitor to be added to the composition preferably ranges from about 0.01% by weight to about 5% by weight on the basis of the total weight of the composition. Moreover, it is also possible to optionally add, for instance, a higher fatty acid derivative such as behenic acid or behenic acid amide to the composition for the purpose of the prevention of any inhibition of polymerization due to oxygen so that the derivative is localized on the surface of the light-sensitive layer during the drying process after the application of the light-sensitive composition. The added amount of such a higher fatty acid derivative preferably ranges from about 0.5% by weight to about 10% by weight on the basis of the total weight of the composition.

Further a coloring agent may be incorporated into the light-sensitive composition for coloring the resulting light-sensitive layer. Examples of such coloring agents usable herein include pigments such as phthalocyanine type dyes (for instance, C.I. Pigment Blue 15:3, 15:4 and 15:6), azo type pigments, carbon black and titanium oxide and dyes such as Ethyl Violet, Crystal Violet, azo dyes, anthraquinone type dyes and cyanine type dyes. The amount of these dyes and pigments preferably ranges from about 0.5% by weight to about 20% by weight on the basis of the total weight of the composition.

In addition, the light-sensitive composition may further comprise additives such as inorganic fillers and/or plasticizers such as dioctyl phthalate, dimethyl phthalate and tricresyl phosphate for the purpose of improving physical properties of the resulting hardened film.

The added amount of these additives is preferably not more than 10% by weight on the basis of the total weight of the composition.

The light-sensitive composition for preparing a photopolymerizable PS plate according to the present invention is dissolved in a variety of organic solvents prior to the application thereof to a substrate as will be detailed below. Examples of such solvent used herein are acetone, methyl ethyl ketone, cyclohexane, ethyl acetate, ethylene dichloride, tetrahydrofuran, toluene, ethylene glycol monomethyl ether, ethylene glycol monoethyl ether, ethylene glycol dimethyl ether, propylene glycol monomethyl ether, propylene glycol monoethyl ether, acetyl acetone, cyclohexanone, diacetone alcohol, ethylene glycol monomethyl ether acetate, ethylene glycol ethyl ether acetate, ethylene glycol monoisopropyl ether, ethylene glycol monobutyl ether acetate, 3-methoxy propanol, methoxymethoxy ethanol, diethylene glycol monomethyl ether, diethylene glycol monoethyl ether, diethylene glycol dimethyl ether, diethylene glycol diethyl ether, propylene glycol monomethyl ether acetate, propylene glycol monoethyl ether acetate, 3-methoxypropyl acetate, N,N-dimethylformamide, dimethylsulfoxide, γ-butyrolactone, methyl lactate and ethyl lactate. These solvents may be used alone or in any combination. In this connection, the solid content in the coating solution suitably ranges from 1 to 50% by weight.

The photopolymerizable composition used for forming the light-sensitive layer of the photopolymerizable PS plate according to the present invention may likewise comprise a surfactant for the purpose of the improvement of the surface quality of the coated film.

The coated amount of the light-sensitive composition suitably ranges from 0.3 to 5.0 g/m² and preferably 0.5 to 3 g/m² as expressed in terms of the weight thereof determined after drying.

A protective layer having oxygen-barrier properties is preferably applied onto the surface of the light-sensitive layer in order to inhibit any polymerization-inhibitory effect of oxygen.

The protective layer having oxygen-barrier properties comprises a water-soluble vinyl polymer and examples thereof include polyvinyl alcohol and partial esters, ethers and acetals thereof as well as copolymers thereof containing a substantial amount of unsubstituted vinyl alcohol units, which can impart desired water-solubility to the resulting copolymers. Examples of such polyvinyl alcohols are those in which 71 to 100% thereof is hydrolyzed and whose degree of polymerization ranges from 300 to 2400. Specific examples thereof are PVA-105, PVA-110, PVA-117, PVA-117H, PVA-120, PVA-124, PVA-124H, PVA-CS, PVA-CST, PVA-HC, PVA-203, PVA-204, PVA-205, PVA-210, PVA-217, PVA-220, PVA-224, PVA-217EE, PVA-217E, PVA-220E, PVA-224E, PVA-405, PVA-420, PVA-613 and L-8 available from Kuraray Co., Ltd. Examples of the foregoing copolymers are polyvinyl acetate chloroacetate or propionate, polyvinyl formal and polyvinyl acetal as well as copolymers thereof, 88 to 100% of which are hydrolyzed. It is also possible to use other useful polymers such as polyvinyl pyrrolidone, gelatin and gum arabic. These polymers may be used alone or in any combination.

In the preparation of the photopolymerizable PS plate according to the present invention, the solvent used when applying the protective layer having oxygen-barrier properties is preferably pure water, but pure water may be admixed with an alcohol such as methanol and ethanol and/or a ketone such as acetone and methyl ethyl ketone and the solid content in the coating solution suitably ranges from 1 to 20% by weight.

The protective layer having oxygen-barrier properties used in the present invention may further comprise other known additives such as a surfactant for the improvement of the coating properties of the resulting solution and/or a water-soluble plasticizer for the improvement of physical properties of the resulting film.

Examples of such water-soluble plasticizers are propionamide, cyclohexanediol, glycerin and sorbitol. It is also possible to add a water-soluble (meth)acrylic polymer to the protective layer.

The coated amount of the protective layer suitably ranges from 0.5 to 10 g/m² and more preferably 1.0 to 5.0 g/m² as expressed in terms of the weight thereof weighed after drying.

Then the substrate used for preparing the photopolymerizable PS plate of the present invention will be detailed below.

The photopolymerizable PS plate of the present invention is prepared by applying the foregoing light-sensitive layer onto a substrate whose surface is hydrophilic in nature. As such hydrophilic substrates, there may be used conventionally known hydrophilic ones employed in the preparation of lithographic printing plates. Such a substrate preferably used herein is an aluminum plate as a dimensionally stable plate-like material. Such an aluminum plate may, if necessary, be subjected to surface treatments such as known physical and/or chemical treatments in order to, for instance, impart hydrophilicity to the surface thereof and improve the strength thereof.

The aluminum plate suitably used herein may be a pure aluminum plate, an aluminum alloy plate mainly comprising aluminum and trace amounts of foreign elements or a plastic film laminated with aluminum foil or on which aluminum is deposited. Examples of foreign elements included in such aluminum alloys are silicon, iron, manganese, copper, magnesium, chromium, zinc, bismuth, nickel and titanium. The content of these foreign elements in the aluminum alloy is at most 10% by weight. In the present invention, particularly preferred aluminum plates are pure aluminum plates. However, it has been difficult to obtain a completely pure aluminum plate from the viewpoint of the refining technique and therefore, aluminum plates containing a trace amount of foreign elements may be used in the present invention. As has been discussed above, the aluminum plate used in the present invention is not restricted to one having a specific composition and appropriately used herein may be those conventionally known and currently used materials. The thickness of the aluminum plate used in the present invention ranges from 0.15 to 0.4 mm and preferably 0.2 to 0.3 mm.

Moreover, the aluminum plate used herein is preferably subjected to a surface treatment such as a surface-roughening treatment (graining treatment), a treatment in which the aluminum plate is dipped in an aqueous solution of, for instance, sodium silicate, potassium fluorozirconate or a phosphoric acid salt or an anodization treatment.

The surface of an aluminum plate can be roughened according to a variety of methods and examples of such methods include a method in which the surface is mechanically surface-roughened, a method in which the surface is electrochemically dissolved and roughened and a method comprising the step of selectively chemically dissolving the surface of the aluminum plate. Specific examples of mechanical methods are known ones such as ball polishing, brush polishing, blast polishing (blasting) and buff polishing (buffing). In addition, the electrochemical surface-roughening treatment may be one in which a DC or AC current is passed through the aluminum plate in an electrolyte such as a hydrochloric acid or nitric acid solution. Moreover, it is also possible to use the method disclosed in, for instance, J.P. KOKAI No. Sho 54-63902, which comprises a combination of the foregoing two methods. In this respect, the aluminum plate is, if desired, subjected to a degreasing treatment using, for instance, a surfactant, an organic solvent and/or an alkaline aqueous solution for the removal of any rolling oil present on the surface thereof prior to the foregoing surface-roughening treatment.

Moreover, preferably used herein is an aluminum plate, which is treated by dipping in a sodium silicate aqueous solution after the surface-roughening treatment. Preferably used in the present invention also includes an aluminum plate, which is anodized and then treated by dipping in an aqueous solution of an alkali metal silicate, as disclosed in J.P. KOKOKU No. Sho 47-5125. Such an anodization treatment is, for instance, carried out by passing an electric current through an aluminum plate serving as a cathode in an electrolyte such as an aqueous or non-aqueous solution of, for instance, an inorganic acid such as phosphoric acid, chromic acid, sulfuric acid or boric acid, an organic acid such as oxalic acid or sulfamic acid or a salt thereof, or a mixture containing at least two of these aqueous and non-aqueous solutions.

Moreover, it is also effective to use silicate electrodeposition as disclosed in U.S. Patent No. 3,658,662.

Effectively used herein also include substrates, which are electrolytically grained and then subjected to a surface-treatment comprising a combination of the foregoing anodization treatment and the treatment with sodium silicate, such as those disclosed in J.P. KOKOKU No. Sho 46-27418 and J.P. KOKAI Nos. Sho 52-58602 and Sho 52-30503.

Aluminum plates suitably used herein also include those subjected to, in order, a mechanical surface-roughening treatment, a chemical etching treatment, an electrolytic graining treatment, an anodization treatment and further a treatment with sodium silicate such as those disclosed in J.P. KOKAI No. Sho 56-28893.

Aluminum plates preferably used herein likewise include those obtained by applying an undercoat layer of a water-soluble resin such as a polyvinyl sulfonic acid, a polymer or a copolymer carrying sulfonate residues on its side chains, polyacrylic acid, a water-soluble metal salt (such as zinc borate), a yellow dye or an amine salt on aluminum plates subjected to the foregoing treatments.

Further, suitably used herein include substrates treated with a sol-gel system carrying functional groups capable of undergoing an addition reaction by the action of radicals and linked through covalent bonds such as those disclosed in J.P. KOKAI No. Hei 7-159983.

Examples of other preferred substrates are arbitrary substrates on which a water-resistant, hydrophilic layer as a surface layer. Examples of such surface layers are those comprising inorganic pigments and binders disclosed in U.S. Patent No. 3,055,295 and J.P. KOKAI No. Sho 56-13168; hydrophilic inflated layers disclosed in J.P. KOKAI No. Hei 9-80744; and sol-gel films comprising, for instance, titanium oxide, polyvinyl alcohol and silicic acid as disclosed in TOKUHYO Hei 8-507727.

These hydrophilization treatments are used not only for making the surface of the substrate hydrophilic, but also for preventing the occurrence of any harmful reaction with a photopolymerizable composition subsequently applied thereto and for the improvement of the adhesion to the light-sensitive layer.

A light-sensitive layer of the foregoing photopolymerizable composition is formed on the substrate detailed above to prepare a photopolymerizable PS plate according to the present invention, but an undercoating layer of an organic or inorganic substance may if desired be formed on the substrate prior to the application of the light-sensitive layer.

The photopolymerizable PS plate according to the present invention is first cut into pieces having a desired size, then the light-sensitive layer thereof is imagewise exposed to conventionally known actinic light rays emitted from, for instance, an He-Cd laser, an Ar ion laser, an FD-YAG laser, an He-Ne laser or a semiconductor laser (wavelength ranging from 350 to 600 nm) and then developed to thus form images on the surface of the substrate.

After the laser exposure, the exposed plate may be heated to increase the degree of polymerization of the photopolymerizable light-sensitive layer and to improve the printing durability of the resulting printing plate.

A protective layer having oxygen-barrier properties is preferably formed on the light-sensitive layer of the photopolymerizable PS plate of the present invention as has been described above. In this case, the protective layer is first removed with water or warmed water and then the light-sensitive layer on the unexposed area is removed with a developer.

The developer used for developing the photopolymerizable PS plate of the present invention is not restricted to any specific one, but preferably used herein are those disclosed in, for instance, J.P. KOKOKU No. Sho 57-7427 and more specifically an aqueous solution of an inorganic alkali agent such as sodium silicate, potassium silicate, sodium hydroxide, potassium hydroxide, lithium hydroxide, sodium tertiary phosphate, sodium secondary phosphate, ammonium tertiary phosphate, ammonium secondary phosphate, sodium metasilicate, sodium bicarbonate or aqueous ammonia or an organic alkali agent such as monoethanolamine or diethanolamine. The concentration of such an alkaline solution ranges from 0.1 to 10% by weight and preferably 0.5 to 5% by weight.

In addition, such an alkaline aqueous solution may comprise, if desired, a small amount of a surfactant or an organic solvent such as benzyl alcohol, 2-phenoxyethanol or 2-butoxyethanol. Examples thereof are those disclosed in, for instance, U.S. Patent Nos. 3,375,171 and 3,615,480.

Examples of excellent developers are those disclosed in, for instance, J.P. KOKAI Nos. Sho 50-26601 and Sho 58-54341 and J.P. KOKOKU Nos. Sho 57-39464 and Sho 56-42860.

The development of the photopolymerizable PS plate of the present invention with the foregoing developer is carried out by, for instance, rubbing the imagewise exposed printing plate with a brush while immersing it in the developer at a temperature ranging from about 0 to 60°C, preferably about 15 to 40°C according to the usual method.

Moreover, when the development is carried out using an automatic developing machine, the developer is fatigued as the throughput of the exposed printing plate increases and therefore, the processing capacity of the developer may be recovered using a replenisher of a fresh developer.

The photopolymerizable PS plate thus developed is post-treated using washing water, a rinsing liquid containing, for instance, a surfactant and/or a desensitizing liquid containing, for instance, gum arabic and a starch derivative, as disclosed in, for instance, J.P. KOKAI Nos. Sho 54-8002, Sho 55-115054 and Sho 59-58431. In addition, the whole surface of the printing plate is exposed to UV rays for the improvement of the printing durability after the development. The post-treatment of the photopolymerizable PS plate of the present invention may comprise various combinations of these treatments.

The present invention will be described in more detail with reference to the following Examples, but the scope of the present invention is not restricted by these specific Examples at all.

### [Examples]

### [Preparation of Photopolymerizable PS Plate]

The surface of a 1S aluminum plate having a thickness of 0.30 mm was grained using a nylon brush of No. 8 and an aqueous suspension of 800 mesh pumice stone and then sufficiently washed with water. The aluminum plate was etched by immersing it in a 10% aqueous sodium hydroxide solution at 70°C for 60 seconds, followed by washing with running water, neutralization and washing thereof with a 20% HNO₃ solution and then washing with water. The aluminum plate thus treated was subjected to an electrolytic surface-roughening treatment in a 1% nitric acid aqueous solution, at the quantity of electricity at the anode time of 300 coulomb/dm², using a sinusoidal alternating waved current under the condition of V_{A} = 12.7 V. At this stage, the surface roughness of the resulting aluminum plate was determined and it was found to be 0.45 µm (as expressed in terms of Ra unit). Subsequently, the aluminum plate was immersed in a 30% H₂SO₄ aqueous solution at 55°C for 2 minutes to carry out the desmutting thereof and then anodized at a current density of 5 A/dm² for 50 seconds in a 20% H₂SO₄ aqueous solution maintained at 33°C, while arranging a cathode on the grained surface of the plate. As a result, the thickness of the resulting anodized layer was found to be 2.7 g/m².

An undercoating layer was applied onto the aluminum plate thus treated according to the following procedures.

The following liquid composition for forming undercoating was mixed with stirring at 30°C. After about 5 minutes, there was observed generation of heat. After continuing the reaction for 60 minutes, the content of the reactor was transferred to another container and then methanol was added thereto in an amount of 30,000 parts by weight to give a coating liquid.

| (Liquid Composition for Undercoating) | |
|---|---|
| Component | Amt. (part by weight) |
| Compound represented by the following formula | 70 |
| Methanol | 130 |
| Water | 20 |
| p-Toluenesulfonic acid | 5 |
| Tetraethoxy silane | 50 |
| 3-Methacryloxypropyl trimethoxysilane | 50 |

[CₙH₂ₙ₊₁-(OC₂H₄)ₘ-O]₂-PO-OH

n = about 10 to 15; m = about 6 to 10

This coating liquid was applied onto the surface of the foregoing processed aluminum plate such that the coated amount thereof was equal to 0.1 g/m² and then dried at 100°C for one minute.

Then a high sensitive, photopolymerizable composition 1 having the following composition was applied onto the undercoating layer thus prepared in an amount of 1.5 g/m² as expressed in terms of the amount weighed after drying and then dried at 100°C for one minute to thus form a light-sensitive layer.

| (Photopolymerizable Composition 1) | |
|---|---|
| Component | Amt. (part by weight) |
| Ethylenically unsaturated group-containing compound (A1, NK Ester U-4H available from Shin Nakamura Kagaku K.K.) | 2.5 |
| Linear organic high molecular weight polymer (B1) | 2.0 |
| Sensitizing agent (C1) | 0.15 |
| Photopolymerization initiator (D1, CGI-784 available from Ciba Geigy Co., Ltd.) | 0.2 |
| Auxiliary sensitizing agent (E1) | 0.3 |
| ε-Phthalocyanine (F1) dispersion | 0.02 |
| Fluorine atom-containing surfactant Megafack F176 (available from Dainippon Ink and Chemicals, Inc.) | 0.03 |
| Methyl ethyl ketone | 9.0 |
| Propylene glycol monomethyl ether acetate | 7.5 |
| Toluene | 11.0 |

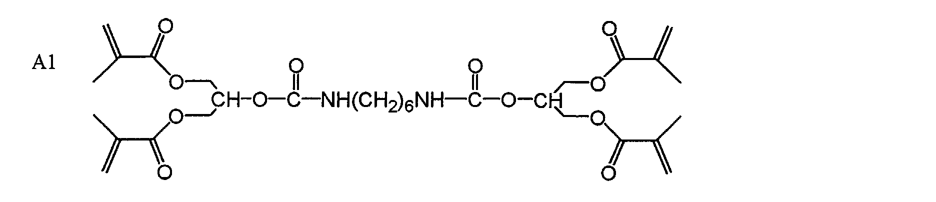

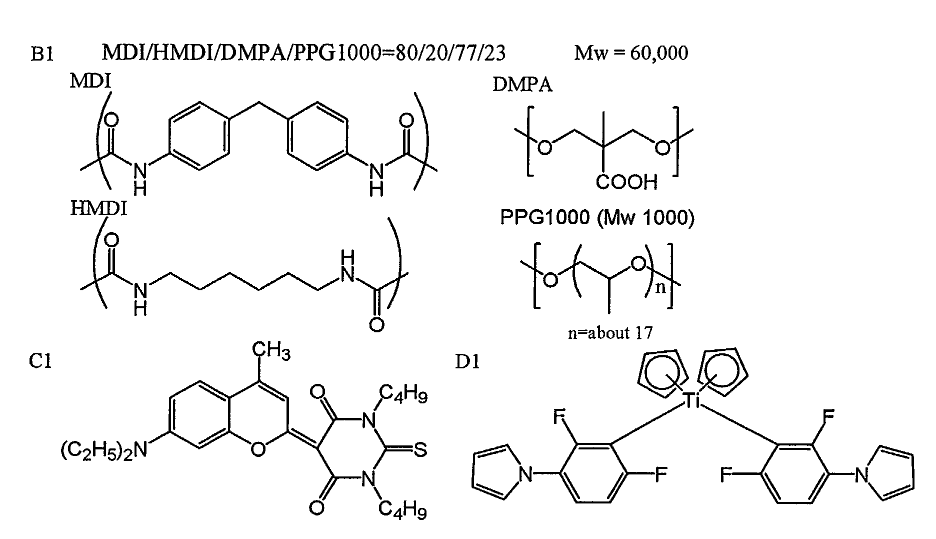

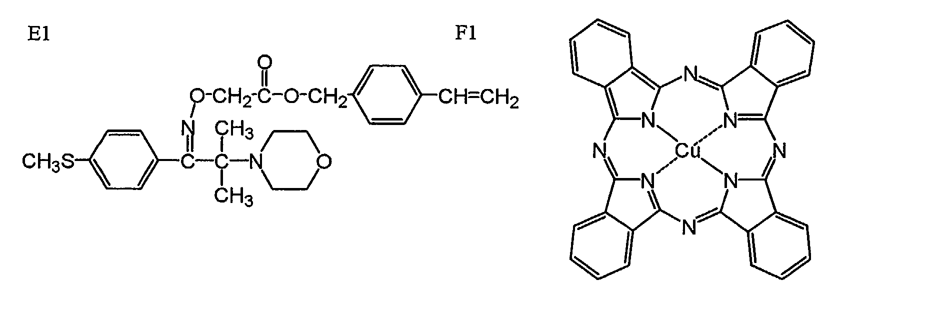

An aqueous solution containing 5.5% by weight of polyvinyl alcohol (PVA 105 having a degree of saponification of 98 mole% and a degree of polymerization of 500) and 0.3% by weight of polyvinyl pyrrolidone K30 (available from Wako Pure Chemical Co., Ltd.) was applied onto the resulting light-sensitive layer such that the coated amount thereof weighed after drying was 2.5 g/m², followed by drying at 120°C for 3 minutes to thus obtain a photopolymerizable PS plate.

Bleached kraft pulp was beaten or refined and diluted to a concentration of 4%. To the stuff, there was added a synthetic sizing agent in an amount of 0.4% by weight and aluminum sulfate was added thereto till the pH value of the mixture reached 5.0. A binder mainly comprising starch was applied to the stuff in an amount of 3.0% by weight followed by conducting a papermaking step to thus prepare a slip-sheet having a density of 0.75 g/m², a smoothness of 25 seconds, a basis weight of 38 g/m² and a water content of 6.0% by weight. The slip-sheet wound into a roll having a width of 90 cm was put on the photopolymerizable PS plate and then the PS plate was cut into pieces having a desired size according to the following method.

A coil-like photopolymerizable PS plate having a thickness of 0.3 mm and a width of 90 cm and provided with the slip sheet was continuously slitted on the both sides thereof to thus give a printing plate having a width of 80 cm using a slitter device as shown in Fig. 1 and cutting blades as shown in Fig. 2, while setting the interstice (D) between the upper cutting blade and the lower cutting blade and the quantity of engagement (S) between the upper cutting blade to the lower cutting blade at the values specified in the following Table 1. Thereafter, the printing plate was cut into sheets having a length of 110 cm (110×80 cm) to give photopolymerizable PS plates. The area (Y) of the notched portion of this plate was determined and summarized in Table 1.

This photopolymerizable PS plate (110×80 cm) was imagewise exposed to light from FD-YAG laser (Luxel Plate Setter P-9600 CTP NEWS 532 nm available from Fuji Photo Film Co., Ltd.) under the following conditions: an exposure value of 200 µ J/cm² and 100 lines/in at 909 dpi. Then the plate was post-heat-treated using an automatic developing machine FLP125NFS (available from Fuji Photo Film Co., Ltd.), followed by washing with water and standard treatments with a developer DV-2 (DV-2: water = 1:4, available from Fuji Photo Film Co., Ltd.) and a desensitizing gum for finishing FP-3W (available from Fuji Photo Film Co., Ltd.; FP-3W: water = 1:1). The temperature of the developer was found to be 25°C and the plate was immersed in the developer for about 22 seconds.

The resulting lithographic printing plate was used to obtain 100,000 printed matters using 4-Color Tower-Type Rotary Press CT7000 (170,000 Machine; available from Tokyo Kikai Seisakusho, Ltd.) as a printing press, ink for newspaper (available from Dainippon Ink and Chemicals, Inc.) as ink, News King Alky for newspaper (pH = 10.2) (available from Toyo Ink Mfg. Co., Ltd.) as dampening water, "TOMAKOMAI" (basis weight of 44 g/m²) (available from Oji Paper Co., Ltd.) as paper and MP-75R (2.07 mm) (available from Kinyosha Co., Ltd.) as a blanket and then the printed matters were inspected for any stain on the area corresponding to the edges of the printing plate.

The plates (150 sheets) were continuously processed using P-9600 CTP NEWS Setter to thus evaluate the setter-conveying characteristics according to the following criteria: "×": at least one plate cannot be conveyed by the setter; "○": all of the plates (150 sheets) could be conveyed without any problem.

**Table 1**

| Ex. No. | (D) µm | (S) µm | (X) µm | (Y) µm² | (Z) µm | Stain at the edges of Printed matters | Setter-conveying characteristi cs |
|---|---|---|---|---|---|---|---|
| 1 | 10 | 300 | 30 | 200 | 1 | ○ | ○ |
| 2 | 50 | 300 | 60 | 3000 | 5 | ○ | ○ |
| 3 | 100 | 300 | 100 | 10000 | 10 | ○ | ○ |
| 4 | 200 | 300 | 150 | 50000 | 20 | ○ | ○ |
| 5 | 300 | 300 | 200 | 100000 | 30 | ○ | ○ |
| 6 | 100 | 100 | 100 | 5000 | 10 | ○ | ○ |
| 7 | 100 | 500 | 100 | 20000 | 10 | ○ | ○ |
| 8 | 100 | 800 | 100 | 40000 | 10 | ○ | ○ |
| 1* | 5 | 300 | 15 | 100 | 0 | × | ○ |
| 2* | 400 | 300 | 250 | 150000 | 50 | ○ | × |
| 3* | 20 | 100 | 40 | 150 | 2 | × | ○ |
| 4* | 5 | 500 | 15 | 250 | 0 | × | ○ |

| | | | | | | | |
|---|---|---|---|---|---|---|---|
| *: Comparative Example | | | | | | | |

As will be seen from the data listed in Table 1, all of the lithographic printing plates obtained using the photopolymerizable PS plate, which has a height (X) at the notched portion on the edge ranging from 30 to 200 µm and an area of the notched portion (Y) ranging from 200 to 100000 µm², never show any stain on the edges of the printed matters and good setter-conveying characteristics. On the other hand, when preparing a lithographic printing plate using a photopolymerizable PS plate beyond the scope of the present invention or such a plate in which at least one of the foregoing physical properties (X) and (Y) were outside the ranges specified in the present invention, there was observed stain on the edges of the printed matters (Comparative Examples 1, 3 and 4) or the setter-conveying characteristics were insufficient (Comparative Example 2).

The present invention relates to a photopolymerizable PS plate comprising an aluminum substrate provided thereon with at least a photopolymerizable light-sensitive layer, the PS plate is characterized in that the edges of the opposed two sides or four sides are curved from the light-sensitive layer towards the back face, wherein a drop observed in the curved portion at the section have a height ranging from 30 to 200 µm and wherein the area of notched portions on the curved portion ranges from 200 to 100,000 µm². This lithographic printing plate permits the solution of the problem such that the surface area of paper corresponding to the edges of the printing plate is stained and the achievement of excellent setter-conveying characteristics.

## Claims

1. A photopolymerizable presensitized plate used for preparing a lithographic printing plate, which comprises an aluminum substrate provided thereon with at least a photopolymerizable light-sensitive layer, the presensitized plate being **characterized in that** the edges of the opposed two sides or four sides of the printing plate are curved from the light-sensitive layer towards the back face, wherein a drop observed in the curved portion at the section has a height ranging from 30 to 200 µm and wherein the area of a notched portion on the curved portion ranges from 200 to 100,000 µm².

2. The photopolymerizable presensitized plate of claim 1, wherein the drop has a height ranging from 40 to 180 µm.

3. The photopolymerizable presensitized plate of claim 1, wherein the area of the notched portion ranges from 500 to 70,000 µm².

4. The photopolymerizable presensitized plate of claim 1, wherein the curved portion of the presensitized plate is formed through a cutting using a slitter device, the interstices (D) between the upper and lower blades range from 10 to 300 µm and the quantity of engagement (S) between the upper blade and the lower blade ranges from 50 to 1000 µm.

5. The photopolymerizable presensitized plate of claim 1, wherein the light-sensitive layer comprises, as essential components, an addition- polymerizable ethylenically unsaturated group-containing compound, a photopolymerization initiator and a polymer binder.

6. The photopolymerizable presensitized plate of claim 1, wherein the light-sensitive layer is formed from a light-sensitive composition, which comprises at least one ethylenically unsaturated group-containing compound in an amount ranging from 5 to 80% by weight on the basis of the total weight of the components constituting the light-sensitive layer.

7. The photopolymerizable presensitized plate of claim 6, wherein the composition comprises at least one ethylenically unsaturated group- containing compound in an amount ranging from 30 to 70% by weight on the basis of the total weight of the components constituting the light-sensitive layer.

8. The photopolymerizable presensitized plate of claim 6, wherein the composition comprises at least one photopolymerization initiator in an amount ranging from 0.05 to 100 parts by weight per 100 parts by weight of the ethylenically unsaturated group-containing compound.

9. The photopolymerizable presensitized plate of claim 8, wherein the composition comprises at least one photopolymerization initiator in an amount ranging from 0.2 to 50 parts by weight per 100 parts by weight of the ethylenically unsaturated group-containing compound.

10. The photopolymerizable presensitized plate of claim 6, wherein the polymer binder has a weight average molecular weight ranging from 5000 to 300,000 and an acid value ranging from 20 to 200.

11. The photopolymerizable presensitized plate of claim 6, wherein the composition comprises the polymer binder in an amount ranging from 30 to 80% by weight on the basis of the total weight of the composition.

12. The photopolymerizable presensitized plate of claim 6, wherein the relative amounts of the photopolymerizable ethylenically unsaturated group-containing compound and the polymer binder range from 2/8 to 8/2.

13. The photopolymerizable presensitized plate of claim 6, wherein the photopolymerization initiator is highly sensitive to light rays or beams emitted from lasers, which emit light rays or beams having wavelengths ranging from 350 nm to 600 nm.
